# EUROPÄISCHE PATENTANMELDUNG

(11) **EP 1 106 457 A2**
(43) Veröffentlichungstag der Anmeldung: **13.06.2001**
(21) Anmeldenummer: 00125537.1
(22) Anmeldetag: 22.11.2000
(51) Int. Cl.: B60S 3/06

(54) **Kraftfahrzeug-Waschstrasse**

(30) Priorität: 30.11.1999 DE 19957706
(71) Anmelder: MTE Messing Technology & Equipment GmbH, 40670 Meerbusch-Osterath (DE)
(72) Erfinder: Messing, Horst, 51789 Lindlar (DE)
(74) Vertreter: Müller, Karl-Ernst, Dr., Dipl.-Ing.

(57) **Zusammenfassung**

Die Erfindung betrifft eine automatische Kraftfahrzeug-Waschstraße, bei welcher die Kraftfahrzeuge längs einer Transportbahn mittels eines Antriebes zwischen beiderseits der Transportbahn angeordneten Waschrotoren hindurch transportiert werden.

## Beschreibung

Die Erfindung betrifft eine automatische Kraftfahrzeug-Waschstraße, bei welcher die Kraftfahrzeuge längs einer Transportbahn mittels eines Antriebes zwischen beiderseits der Transportbahn angeordneten Waschrotoren hindurch transportiert werden, wobei die Waschrotoren zu ihrer Anstellung an die zu reinigenden Flächen des Kraftfahrzeuges an schwenkbar angeordneten Tragarmen gehaltert sind und bei der zu Beginn des Reinigungsvorganges erfolgenden Beaufschlagung der Frontpartie des Kraftfahrzeuges eine Drehrichtung entgegen der Transportrichtung des Kraftfahrzeuges aufweisen und nach Passieren der Außenspiegel eine Drehrichtungsumkehr eingerichtet und die mit der Transportrichtung des Kraftfahrzeuges gleichsinnige Drehbewegung der Waschrotoren während der Reinigung der Seitenflächen und der Heckpartie beibehalten ist und vor Eintritt des nächstfolgenden Fahrzeuges eine Drehrichtungsumkehr der Waschrotoren erfolgt.

Eine Kraftfahrzeug-Waschstraße mit den vorgenannten Merkmalen ist in der DE 195 15 740 A1 beschrieben. Die bekannte Waschstraße weist einen aufwendigen Aufbau mit zu den beiden Seiten der Transportbahn für die Kraftfahrzeuge jeweils einem Seitenrotor und einer zusätzlichen Waschrotoranordnung auf, die ihrerseits jeweils aus einem unteren Rotor und einem oberen Rotor besteht. Die Waschrotoranordnung mit den beiden Waschrotoren ist dabei an einem zur Transportrichtung des Kraftfahrzeuges schwenkbar angeordneten Träger befestigt, wobei der Träger von einer Feder beaufschlagt und so die Waschrotoranordnung in Anlage an dem Kraftfahrzeug gehalten ist. Die beiden gesondert angeordneten Seitenrotoren sind jeweils an einem zweiarmigen, in einem zwischen den Armen angeordneten Gelenk ausknickbaren Träger gehaltert, wobei jeder Arm von einem zugeordneten Zylinder als Antrieb ansteuerbar ist. Bei der bekannten Waschstraße ist bereits eine Drehrichtungsumkehr der Waschrotoren während des Reinigungsvorganges verwirklicht, da eine Drehrichtung der Waschrotoren entgegen der Transportrichtung des Kraftfahrzeuges eine Beschädigung der Nummernschilder und der Außenspiegel verhindert, während eine Drehrichtung gleichsinnig mit der Transportrichtung im Heckbereich des Kraftfahrzeuges eine Beschädigung der hinteren Nummernschilder vermeidet.

Mit der bekannten Waschstraße ist der Nachteil verbunden, daß aufgrund der komplizierten und aufwendigen WaschrotorAnordnung und insbesondere auch aufgrund der Federbeaufschlagung eines Teils der Rotoranordnung der Durchsatz an Kraftfahrzeugen und damit die Leistungsfähigkeit der Waschstraße begrenzt ist. Zudem ist die Waschstraße in ihrer Gesamtausrüstung aufwendig und bei entsprechender Kapazitätsbeanspruchung auch wartungsintensiv.

Der Erfindung liegt daher die Aufgabe zugrunde, eine Waschstraße mit den eingangs genannten Merkmalen in ihrer Auslegung zu vereinfachen und den Durchsatz zu erhöhen, wobei eine gute Qualität der Waschleistung sichergestellt ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß auf jeder Seite der Transportbahn eine geradlinig ausgebildete Tragschiene mit einem an dieser verfahrbar gehalterten Waschrotor im Winkel zur Transportrichtung des Kraftfahrzeuges schwenkbar angeordnet und über ein Antriebsmittel gesteuert in Anlage an dem Fahrzeug gehalten ist und daß der Waschrotor in einem längs der Tragschiene über einen Antrieb mit einstellbarer Geschwindigkeit verfahrbaren Schlitten um seine Hochachse pendelnd aufgehängt ist.

Mit der Erfindung ist der Vorteil verbunden, daß aufgrund der vorgesehenen Anordnung nur noch eines Waschrotors auf jeder Seite der Transportbahn für das Kraftfahrzeug der Aufbau der Waschstraße insgesamt vereinfacht ist. Zu dem einfachen Aufbau der Waschstraße trägt auch bei, daß zur Halterung des jeweils einen Waschrotors eine einfach herzustellende geradlinige Tragschiene ausreicht, wobei die Tragschiene bzw. der Waschrotor über ein Antriebsmittel gesteuert, d. h. mit einem voreinstellbaren Anpreßdruck, in Anlage an dem Fahrzeug gehalten wird. Der an der Tragschiene verfahrbare Waschrotor folgt dabei dem Transportvorschub des Kraftfahrzeuges, wobei die um seine Hochachse pendelne Aufhängung des Waschrotors eine optimale Anpassung an die Konturen des Kraftfahrzeuges sicherstellt. Der erforderliche Anpreßdruck des Waschrotors gegen die zu reinigende Fläche des Fahrzeuges wird dabei insbesondere über die Geschwindigkeit des den Waschrotor nachführenden Schlittens und die pendelnde Aufhängung des Waschrotors gewährleistet, wobei die Geschwindigkeit des Schlittens in Abhängigkeit von der Transportgeschwindigkeit der Kraftfahrzeuge durch die Waschstraße einstellbar sein kann. Die aktive Nachführung des Waschrotors längs der Tragschiene bietet dabei insbesondere den Vorteil, daß die Reinigung des Hecks des Kraftfahrzeuges ohne zeitlichen Verzug nach dem Umschwenken des Waschrotors um den hinteren Kotflügel erfolgt, so daß auf diese Weise der Abstand der nacheinander durch die Waschstraße zu transportierenden Kraftfahrzeuge gering gehalten werden kann.

Nach alternativen Ausführungsbeispielen der Erfindung ist vorgesehen, daß das die Tragschiene in Anlage an dem Fahrzeug drückende Antriebsmittel ein mit einem voreinstellbaren Druck gesteuerter Pneumatikzylinder oder auch Hydraulikzylinder ist. Dabei kann auch vorgesehen sein, die Überwachung des Drucks, mit welchem der Waschrotor gegen die Fahrzeugfläche liegt, durch einen entsprechend angeordneten Druckschalter zu überwachen.

Nach einem Ausführungsbeispiel der Erfindung ist vorgesehen, daß der Schlitten an der Tragschiene mittels eines Zahnriemens als Antrieb verfahrbar und der den Zahnriemen antreibende Motor bezüglich der Fahrgeschwindigkeit des Schlittens regelbar ist.

In der Zeichnung ist ein Ausführungsbeispiel der Erfindung wiedergegeben, welches nachstehend beschrieben ist. Es zeigen:
- Fig. 1A - F: in einer schematischen Darstellung Anordnung und Arbeitsweise der Waschrotoren beim Reinigungsvorgang eines Kraftfahrzeuges,
- Fig. 2: einen Waschrotor nebst Halterung in einer Seitenansicht,
- Fig. 3A - C: die unterschiedlichen Stellungen des Waschrotors in unterschiedlicher Betriebslage.

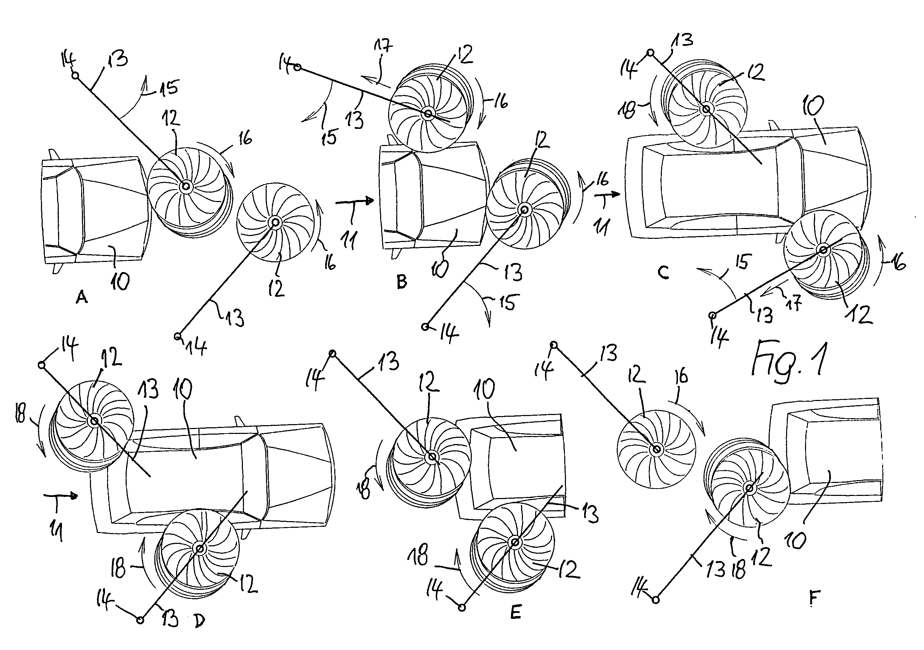

Aus den Figuren 1A bis F ist die Arbeitsweise der beiden Waschrotoren bei der Reinigung eines Kraftfahrzeuges 10 ersichtlich, welches in Transportrichtung 11 zwischen den Waschrotoren 12 durch die Waschstraße transportiert wird. In Figur 1A ist dabei der Beginn des Reinigungsvorganges mit der Anlage des in Transportrichtung 11 linken Waschrotors 12 an der Frontpartie des Kraftfahrzeuges 10 dargestellt, während der in Transportrichtung 11 rechte Waschrotor 12 noch außer Funktion steht. Die beiden Waschrotoren 12 sind längs einer sie tragenden Tragschiene 13 verfahrbar eingerichtet, wie dies durch den Pfeil 17 (Figur 1B) angedeutet ist. Die Tragschiene 13 ist an einer Stütze 14 schwenkbar gelagert und in der mit Pfeil 15 angedeuteten Richtung verschwenkbar, wobei die Tragschiene 13 mittels eines nicht dargestellten Antriebsmittels, vorzugsweise eines Pneumatik- oder Hydraulikzylinders in Anlage gegen das Fahrzeug 10 gedrückt wird. Bei dem in den Figuren 1A und B dargestellten Reinigungsbeginn weisen die beiden Waschrotoren 12 eine Drehrichtung gemäß Pfeil 16 entgegen der Transportrichtung 11 des Kraftfahrzeuges 10 auf.

Die Drehrichtung entsprechend Pfeil 16 stellt dabei sicher, daß das an der Frontseite des Kraftfahrzeuges 10 befindliche Nummernschild nicht beschädigt wird, ebenso verhindert diese Drehrichtung eine Beschädigung der Außenspiegel des Kraftfahrzeuges beim Hinweggehen des Waschrotors 12. Aufgrund des Vorschubes des Kraftfahrzeuges 10 in Transportrichtung 11 drückt das Kraftfahrzeug 10 den Waschrotor 12 und die diesen halternde Tragschiene 13 in Richtung des Pfeils 15 weg, wobei diesem Wegdrücken ein entsprechender Druckwiderstand seitens des nicht dargestellten Antriebsmittels entgegengesetzt wird, wodurch der Andruck des Waschrotors 12 gegen die zu reinigende Fahrzeugfläche sichergestellt ist. Der Schwenkbewegung der Tragschiene 13 folgend wird der Waschrotor 12 gleichzeitig längs der Tragschiene 13 in Richtung auf die Stütze 14 verfahren (Pfeil 17).

Wie sich aus Figur 1C im einzelnen ergibt, erfolgt nach Passieren des Außenspiegels eine Drehrichtungsumkehr des Waschrotors 12 in eine mit Pfeil 18 gekennzeichnete Drehrichtung, die mit der Transportrichtung 11 gleichsinnig ist.

In den Figuren 1D bis F ist die Reinigung der Heckpartie des Kraftfahrzeuges dargestellt, wobei der jeweilige Waschrotor 12 längs der Tragschiene 13 über den Antrieb nachgeführt wird und dem Kraftfahrzeug 10 nachläuft, wobei in dieser Betriebsphase der erforderliche Andruck über die Geschwindigkeit der Nachführung des Waschrotors 12 aufrechterhalten wird.

Sobald der jeweilige Waschrotor 12 keinen Kontakt mehr mit dem Fahrzeug hat, erfolgt automatisch eine Drehrichtungsumkehr, so daß die Betriebsbereitschaft für die Reinigung des nächstfolgenden Fahrzeuges entsprechend Figur 1A hergestellt ist.

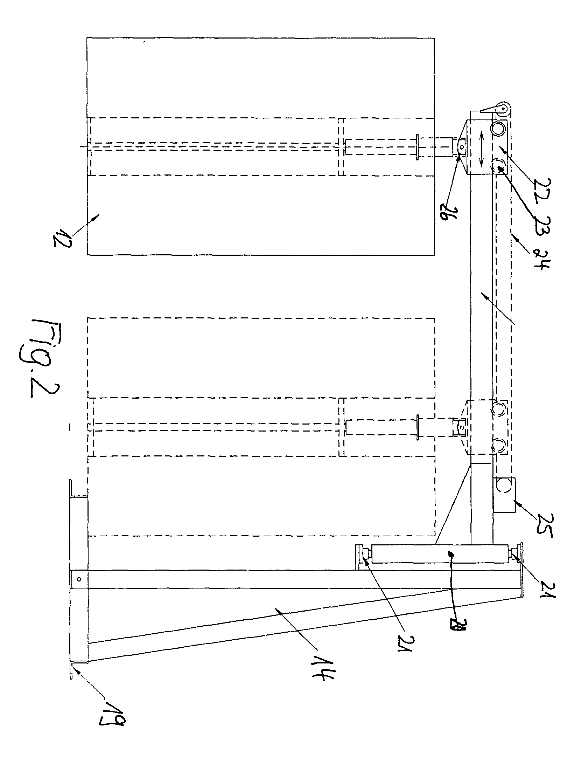

Wie sich aus Figur 2 im einzelnen ergibt, ist die Stütze 14 im Boden 19 der Waschhalle verankert. An der Stütze 14 ist die Tragschiene 13 mittels eines zwischen zwei Kugellagern 21 drehbar angeordneten Haltezapfens 20 schwenkbar gelagert. Längs der Tragschiene 13 ist ein Schlitten 22 an Kunststoffrollen 23 verfahrbar, wobei für das Verfahren des Schlittens 22 auf der Oberseite der Tragschiene 13 ein Zahnriementrieb 24 ausgebildet ist, der über einen Motor 25 in seiner Geschwindigkeit steuerbar ist. Der Waschrotor 12 ist an dem Schlitten 22 über ein Pendelgelenk 26 um seine Hochachse pendelnd aufgehängt.

Der Antriebsmotor für den Waschrotor 12 ist in der Zeichnung nicht dargestellt und befindet sich unterhalb des Pendelgelenks auf der Rotorwelle selbst.

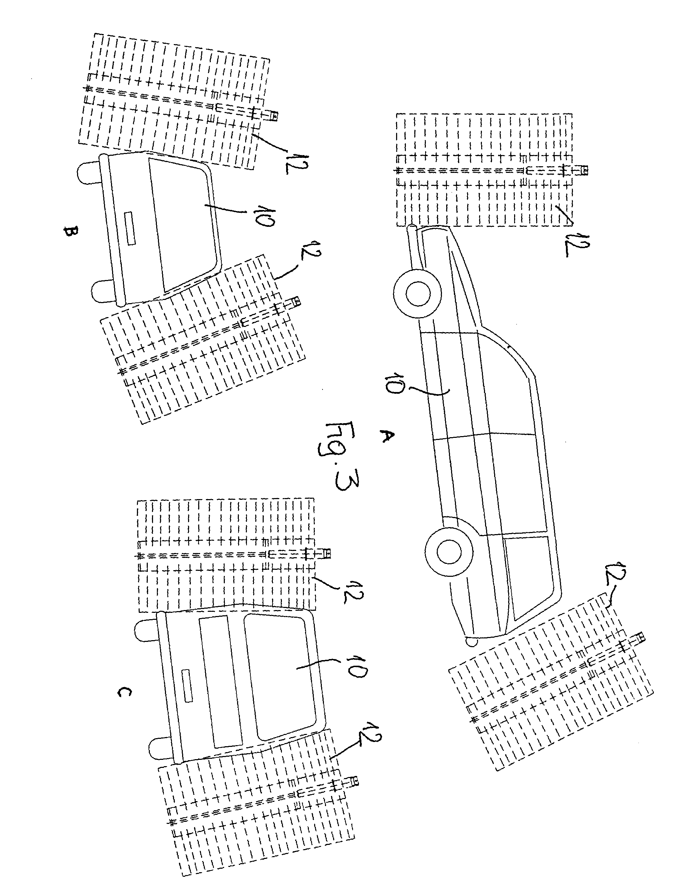

Aus den Figuren 3A und B ist die gute Anlage der Waschrotoren 12 gegen die zu reinigenden Fahrzeugflächen in den unterschiedlichen Betriebslagen aufgrund der pendelnden Aufhängung der Waschrotoren ersichtlich. Aus Figur 3C ergibt sich die gleiche gute Reinigungswirkung auch bei einem höherbauenden Fahrzeug, beispielsweise einem Transporter.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Automatische Kraftfahrzeug-Waschstraße, bei welcher die Kraftfahrzeuge längs einer Transportbahn mittels eines Antriebes zwischen beiderseits der Transportbahn angeordneten Waschrotoren hindurch transportiert werden, wobei die Waschrotoren zu ihrer Anstellung an die zu reinigenden Flächen des Kraftfahrzeuges an schwenkbar angeordneten Tragarmen gehaltert sind und bei der zu Beginn des Reinigungsvorganges erfolgenden Beaufschlagung der Frontpartie des Kraftfahrzeuges eine Drehrichtung entgegen der Transportrichtung des Kraftfahrzeuges aufweisen und nach Passieren der Außenspiegel eine Drehrichtungsumkehr eingerichtet und die mit der Transportrichtung des Kraftfahrzeuges gleichsinnige Drehbewegung der Waschrotoren während der Reinigung der Seitenflächen und der Heckpartie beibehalten ist und vor Eintritt des nächstfolgenden Fahrzeuges eine Drehrichtungsumkehr der Waschrotoren erfolgt, dadurch gekennzeichnet, daß auf jeder Seite der Transportbahn eine geradlinig ausgebildete Tragschiene (13) mit einem an dieser verfahrbar gehalterten Waschrotor (12) im Winkel zur Transportrichtung des Kraftfahrzeuges (10) schwenkbar angeordnet und über ein Antriebsmittel gesteuert in Anlage an dem Fahrzeug (10) gehalten ist und daß der Waschrotor (12) in einem längs der Tragschiene (13) über einen Antrieb mit einstellbarer Geschwindigkeit verfahrbaren Schlitten (22) um seine Hochachse pendelnd aufgehängt ist.

2. Kraftfahrzeug-Waschstraße nach Anspruch 1, dadurch gekennzeichnet, daß das die Tragschiene (13) in Anlage an dem Kraftfahrzeug (10) drückende Antriebsmittel ein mit einem voreinstellbaren Druck gesteuerter Pneumatikzylinder ist.

3. Kraftfahrzeug-Waschstraße nach Anspruch 1, dadurch gekennzeichnet, daß das die Tragschiene (13) in Anlage an das Kraftfahrzeug (10) drückende Antriebsmittel ein mit einem voreinstellbaren Druck gesteuerter Hydraulikzylinder ist.

4. Kraftfahrzeug-Waschstraße nach einem der Ansprüche 1 bis 3, dadurch gekennzeichnet, daß der Schlitten (22) an der Tragschiene (13) mittels eines Zahnriemens (24) als Antrieb verfahrbar und der den Zahnriemen (24) antreibende Motor (25) bezüglich der Fahrgeschwindigkeit des Schlittens (22) regelbar ist.
